# EUROPÄISCHE PATENTANMELDUNG

(11) **EP 1 063 607 A1**
(43) Veröffentlichungstag der Anmeldung: **27.12.2000**
(21) Anmeldenummer: 99112287.0
(22) Anmeldetag: 25.06.1999
(51) Int. Cl.: G06K 11/08, G06K 11/18

(54) **Vorrichtung und Verfahren zur Eingabe von Streuerinformationen in Computersysteme**

(71) Anmelder: SIEMENS AKTIENGESELLSCHAFT, 80333 München (DE)
(72) Erfinder: Seytter, Fritz, 81669 München (DE); Kocourek, Christine, 81549 München (DE); Bock, Gerhard, 82152 Krailling (DE)

(57) **Zusammenfassung**

Die Erfindung betrifft eine Eingabevorrichtung für Computer-systeme und ein dazugehöriges Verfahren mit einer Aufnahmeeinheit (1) zum seriellen Aufnehmen von Bildinformationen (A, A'). Eine Bildauswerteeinheit (3) wertet hierbei eine relative Verschiebung der seriell aufgenommenen Bildinformationen (A, A') aus, wobei eine Datenverarbeitungseinheit (4) eine über eine Anzeigeeinheit (2) dargestellte Auswahlinformation (P) entsprechend der ermittelten Steuerinformation verschiebt.

## Beschreibung

Die Erfindung bezieht sich auf eine Vorrichtung und ein Verfahren zum Eingeben von Steuerinformationen in Computersysteme und insbesondere auf eine Eingabevorrichtung und ein dazugehöriges Verfahren zur Bedienung eines mobilen Multimedia-Kommunikationsendgeräts (mobiles Bildtelefon).

Mobile Kommunikationsendgeräte wie z. B. Handys erhalten zunehmend Zugang zu sogenannten "online-Diensten". Insbesondere durch die Einführung des breitbandigen zukünftigen Mobilfunknetzes UMTS wird qualitativ hochwertig Internet-Zugang mobil möglich.

In gleicher Weise gewinnen sogenannte Kleinst-Computersysteme (wie z.B. Palm-Geräte) zunehmend an Bedeutung, in denen verschiedenste Organisations-Funktionen (wie z. B. Adreßverwaltung, Tagesplaner, Aufgabenliste, ...) implementiert sind.

Zur Bedienung dieser anzeigegesteuerten Computersysteme benötigt man eine Eingabevorrichtung, mit der die an einer Anzeigeeinheit dargestellten Informationen gesteuert bzw. ausgewählt werden können.

Üblicherweise besitzen derartige mobile Kleinst-Computersysteme sogenannte "touch-screens" als Eingabevorrichtung, wobei die Anzeigeeinheit mit einer berührungsempfindlichen Schicht ausgestattet ist, und über einen zusätzlichen Eingabestift eine entsprechende Eingabe von Steuerinformationen bzw. eine Auswahl der angezeigten Informationen ermöglicht wird. Nachteilig ist bei derartigen herkömmlichen Eingabevorrichtungen jedoch, daß der zusätzliche Eingabestift im Gerät untergebracht werden muß und somit verlorengehen kann. Ferner ist eine Oberfläche dieser herkömmlichen "touch-screen"-Anzeigeeinheiten mechanisch nicht sehr robust.

Ferner sind sogenannte herkömmliche "Maus"-Eingabevorrichtungen bekannt, wobei ein rollender Ball in ein entsprechendes elektrisches Signal umgewandelt wird, das als Zeiger symbol bzw. Auswahlinformation an einer Anzeigeeinheit dargestellt wird. Darüberhinaus können Steuertasten als Eingabevorrichtung für Computersysteme verwendet werden.

Insbesondere bei Kleinst-Computersystemen sind jedoch derartige Eingabevorrichtungen aufgrund ihres erhöhten Platzbedarfs nicht möglich.

Alternativ zu den vorstehend beschriebenen berührungsgesteuerten Eingabevorrichtungen sind sogenannte berührungslose Eingabevorrichtungen bekannt, bei denen beispielsweise eine Videokamera eine Position eines Eingabestiftes erfaßt , auswertet und auf der Grundlage der Auswertung anschließend ein in der Anzeigeeinheit dargestelltes Zeiger symbol bzw. eine Auswahlinformation verschoben wird (z.B. US 5,726,685). Ferner ist aus der Druckschrift US 5,617,312 eine sogenannte Gesten-Eingabevorrichtung bekannt, bei der Gesten einer Person von einer Kamera aufgenommen werden und anschließend in entsprechende Steuersignale zur Steuerung eines in der Anzeigeeinheit dargestellten Zeigersymbols bzw. Auswahlinformation umgewandelt werden. Da diese Eingabevorrichtungen auf einer relativ komplexen Mustererkennung beruhen, sind sie jedoch zumeist fehleranfällig und benötigen eine hohe Rechenleistung.

Der Erfindung liegt daher die Aufgabe zugrunde, eine Eingabevorrichtung und ein dazugehöriges Verfahren für Computersysteme zu schaffen, welches platzsparend, kostengünstig und zuverlässig ist.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 17 gelöst.

Insbesondere durch die Verwendung einer Bildauswerteeinheit, die aus einer relativen Verschiebung von seriell aufgenommenen Bildinformationen Steuerinformationen ermittelt, erhält man eine Eingabevorrichtung, die bei kleinstem Platzbedarf Steuerinformationen äußerst zuverlässig aus einer relativen Bewegung bzw. Verschiebung von Kamera bzw. Aufnahmeeinheit und aufgenommenen Objekt ermittelt.

Vorzugsweise wird als Bildauswerteeinheit eine Bildkompressionseinrichtung zum Erzeugen von Bewegungsvektoren verwendet, wobei die Steuerinformationen aus einem Haupt-Bewegungsvektor abgeleitet sind. Auf diese Weise können insbesondere bei mobilen Bildtelefonen die bereits vorhandene Aufnahmeeinheit sowie das dazugehörige Bildkompressionsverfahren gleichzeitig als Eingabevorrichtung verwendet werden.

Vorzugsweise werden zum Erzeugen von x- und y-Komponenten der Steuerinformationen jeweilige parallele Verschiebungskomponenten der Bildinformationen in x- und y-Richtung verwendet, wodurch sich eine Steuerung eines Zeigersymbols bzw. einer Auswahlinformation in einer zweidimensionalen Anzeige realisieren läßt. Die Steuerinformationen können jedoch auch eine z-Komponente aufweisen, die sich aus einer konzentrischen Verschiebung der Bildinformationen in x- und y-Richtung ergibt, wodurch sich eine Steuerung eines Zeigersymbols bzw. einer Auswahlinformation in einer dreidimensionalen oder quasi-dreidimensionalen Anzeige realisieren läßt. Darüberhinaus läßt sich dadurch eine intuitive Vergrößerung bzw. Verkleinerung des Abbildungsmaßstabes erzeugen. Zum Erzeugen einer derartigen konzentrischen Verschiebung von Bildinformationen für eine dreidimensionale Eingabe kann die Aufnahmeeinheit vorzugsweise eine Zoom-Funktionseinheit aufweisen.

Als Computersystem wird insbesondere ein mobiles Multimedia-Kommunikationsendgerät verwendet, wobei in einem mobilen Bildtelefon die Aufnahmeeinheit sowohl zum Aufnehmen eines Gesprächspartners als auch als Eingabevorrichtung verwendet wird. In gleicher Weise wird eine Anzeigeeinheit sowohl zum Anzeigen eines Gesprächspartners als auch zum Anzeigen einer Internet-Seite, Organisations-Seite, usw. verwendet. Somit erhält man eine äußerst kostengünstige und platzsparende Realisierung der Eingabevorrichtung. Die Aufnahmeeinheit besteht hierbei insbesondere aus einer CCD- oder CMOS-Sensorkamera, wodurch sich der Platzbedarf weiter verringert.

Vorzugsweise nimmt die Aufnahmeeinheit in Anzeigerichtung der Anzeigeeinheit Bildinformationen zur Eingabesteuerung auf, sie kann jedoch auch Bildinformationen in entgegengesetzter Richtung aufnehmen. Dies wirkt sich insbesondere dann vorteilhaft aus, wenn die Eingabevorrichtung in einem mobilen Bildtelefon ausgebildet ist, da bei Auflegen des Bildtelefons auf eine geeignete Unterlage durch entsprechendes Hin- und Herbewegen des Bildtelefons ein dazugehöriges Zeigersymbol in der Anzeigeeinheit wie bei einer herkömmlichen Maus-Eingabevorrichtung verschoben werden kann.

Vorzugsweise besitzt die Aufnahmeeinheit ein Makro-Kamerasystem zum Aufnehmen von Bildinformationen aus sehr kurzer Entfernung, wodurch beispielsweise eine Eingabe durch Auflegen eines Fingers unmittelbar auf die Aufnahmeeinheit erfolgen kann. Besitzt die Aufnahmeeinheit darüber hinaus einen Druck-Sensor zum Bestätigen einer angezeigten Auswahlinformation, so läßt sich die Eingabevorrichtung wie eine herkömmliche "touch-screen"-Eingabevorrichtung bedienen.

In den Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:
Figur 1 eine schematische Darstellung der erfindungsgemäßen Eingabevorrichtung;
Figur 2 eine schematische Darstellung von seriell aufgenommenen Bildinformationen zur Veranschaulichung einer dreidimensionalen Steuerung;
Figur 3a und 3b schematische Darstellungen eines mobilen Kommunikations-Endgeräts mit einer Eingabevorrichtung gemäß einem ersten Ausführungsbeispiel;
Figur 4 eine schematische Darstellung eines mobilen Kommunikations-Endgerätes mit einer Eingabevorrichtung gemäß einem zweiten Ausführungsbeispiel; und
Figur 5a bis 5c schematische Teildarstellungen eines mobilen Kommunikations-Endgerätes mit einer Eingabevorrichtung gemäß einem dritten Ausführungsbeispiel.

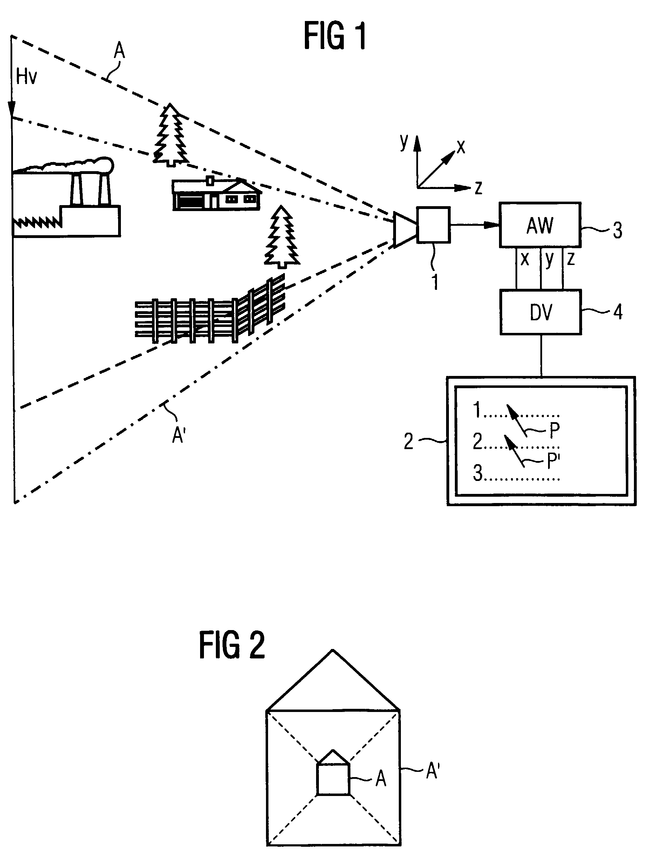

Figur 1 zeigt eine schematische Darstellung einer erfindungsgemäßen Eingabevorrichtung. In Figur 1 bezeichnet das Bezugszeichen 1 eine Aufnahmeeinheit zum seriellen Aufnehmen von Bildinformationen, wobei eine erste Bildinformation A im wesentlichen eine Landschaft mit einem Haus, zwei Bäumen und einem Industriegebäude darstellt. Nach Verschwenken der Aufnahmeeinheit 1 in negativer y-Richtung werden zweite Bildinformationen A' aufgenommen, die im wesentlichen aus dem Haus, dem Baum und dem Industriegebäude der ersten Bildinformationen A und einem zusätzlichen Zaun besteht. Der in den ersten Bildinformationen A vorhandene weitere Baum fehlt aufgrund des Schwenks der Aufnahmeeinheit 1 in den zweiten Bildinformationen A'.

Eine Bildauswerteeinheit 3 (AW) dient zur Auswertung der seriell aufgenommenen ersten und zweiten Bildinformationen A und A', wobei Steuerinformationen x, y und z ermittelt werden. Die Auswertung der Bildauswerteeinheit 3 beruht hierbei im Wesentlichen auf dem Ermitteln einer relativen Verschiebung zwischen den seriell aufgenommenen Bildinformationen, d.h. zwischen den ersten Bildinformationen A und den zweiten Bildinformationen A'. Genauer gesagt wird ein Haupt-Verschiebevektor HV ermittelt, der einer Verschiebung der wesentlichen Bildbestandteile innerhalb der Bildinformationen A und A' entspricht.

Bei dem in Figur 1 dargestellten Schwenk der Aufnahmeeinheit 1 in y-Richtung werden demzufolge bei einer Auswertung der Bildinformationen A und A' in der Auswerteeinheit 3 der Haupt-Verschiebevektor HV ermittelt, der im wesentlichen eine Verschiebung in y-Richtung darstellt. Die so gewonnene Steuerinformation in y-Richtung wird anschließend in einer Datenverarbeitungseinheit 4 (DV) derart verarbeitet, daß eine an der Datenverarbeitungseinheit 4 angeschlossene Anzeigeeinheit 2 eine entsprechende Verschiebung einer in der Anzeigeeinheit 2 dargestellten Auswahlinformation P nach P' bewirkt. In Figur 1 ist die in der Anzeigeeinheit 2 dargestellte Auswahlinformation ein Zeigersymbol P, das sich bei einer ersten Kamerastellung zum Aufnehmen der ersten Bildinformationen A in einer oberen Position befindet und mit dem Verschwenken der Aufnahmeeinheit 1 zum Aufnehmen der zweiten Bildinformationen A' in eine untere Position (P') wandert.

Demzufolge kann gemäß Figur 1 durch Verschwenken einer Aufnahmeeinheit 1 eine relative Verschiebung von seriell aufgenommenen Bildinformationen hervorgerufen und ausgewertet werden, die in der Anzeigeeinheit 2 eine Verschiebung der dargestellten Zeigersymbole P nach P' hervorruft.

Die relative Verschiebung wird hierbei anhand der wesentlichen Strukturen der Bildinformationen A und A' ermittelt. Genauer gesagt wird die relative Verschiebung nicht anhand von Mikroverschiebungen sondern anhand von Makroverschiebungen in den Bildinformationen A und A' ermittelt. Unter Makroverschiebungen versteht man beispielsweise Verschiebungen des allgemeinen Hintergrunds der Bildinformationen A und A', während Mikroverschiebungen Verschiebungen von begrenzten Bildbereichen aufgrund von aktuellen und schnellen Bewegungen sind. Demzufolge würde ein durch die in Figur 1 dargestellte Landschaft fahrendes Auto keine Makroverschiebung, sondern lediglich eine von der Eingabevorrichtung unberücksichtigte Mikroverschiebung von Bildinformationen hervorrufen.

Erfindungsgemäß werden für die Eingabe von Steuerinformationen bzw. die Steuerung von an der Anzeigeeinheit 2 dargestellten Auswahlinformationen P und P' lediglich Makroverschiebungen der aufgenommenen Bildinformationen berücksichtigt, wobei ein nicht dargestellter Schwellwertentscheider eine absolute Größe für die Makroverschiebung einstellt. Demzufolge wird von der Auswerteeinheit 3 beispielsweise eine Makroverschiebung berücksichtigt, wenn mindestens 90 % der von der Aufnahmeeinheit 1 aufgenommenen Bildinformationen die gleiche oder eine ähnliche Verschiebung aufweisen. Unter gleicher Verschiebung versteht man hierbei eine parallel Verschiebung in im wesentlichen gleicher x- und y-Richtung, während eine ähnliche Verschiebung eine Verschiebung in z-Richtung bedeutet.

Figur 2 zeigt eine schematische Darstellung zur Veranschaulichung einer relativen Verschiebung von Bildinformationen in einer z-Richtung. Gemäß Figur 2 bestehen die von der Aufnahmeeinheit 1 aufgenommenen Bildinformationen aus einem Haus, das sich zunächst weit weg befindet (Bildinformationen A) und dem gleichen Haus, das durch Annäherung in z-Richtung vergrößert durch die Bildinformationen A' dargestellt ist. Bei einer Verschiebung in z-Richtung sind demzufolge die Verschiebevektoren nicht parallel zueinander in x- oder y-Richtung geordnet, sondern zeigen eine konzentrische Verschieberichtung. Derartige konzentrisch ausgerichtete Verschiebevektoren können daher von der Auswerteeinheit 3 als Steuerinformationen in z-Richtung ausgewertet werden, wodurch sogar eine dreidimensionale Steuerung der in der Anzeigeeinheit 2 dargestellten Auswahlinformationen, d. h. Zeigersymbole P und P' ermöglicht ist. Die Anzeigeeinheit 2 kann hierbei auch eine dreidimensionale Anzeigeeinheit darstellen (z. B. holographische Anzeigeeinheit).

Alternativ zur Bewegung der Aufnahmeeinheit 1 in z-Richtung, d.h. Annäherung an das aufzunehmende Objekt, kann die Aufnahmeeinheit 1 auch eine nicht dargestellte (elektronische oder mechanische) Zoom-Funktionseinheit aufweisen, mit der in gleicher Weise eine konzentrische Verschiebung der Bildinformationen durchgeführt werden kann. Ebenso kann die Aufnahmeeinheit 1 eine nicht dargestellte Dreh- oder Schwenkeinheit aufweisen, mit der die Makro-Verschiebungen in x- und y-Richtung realisiert werden können.

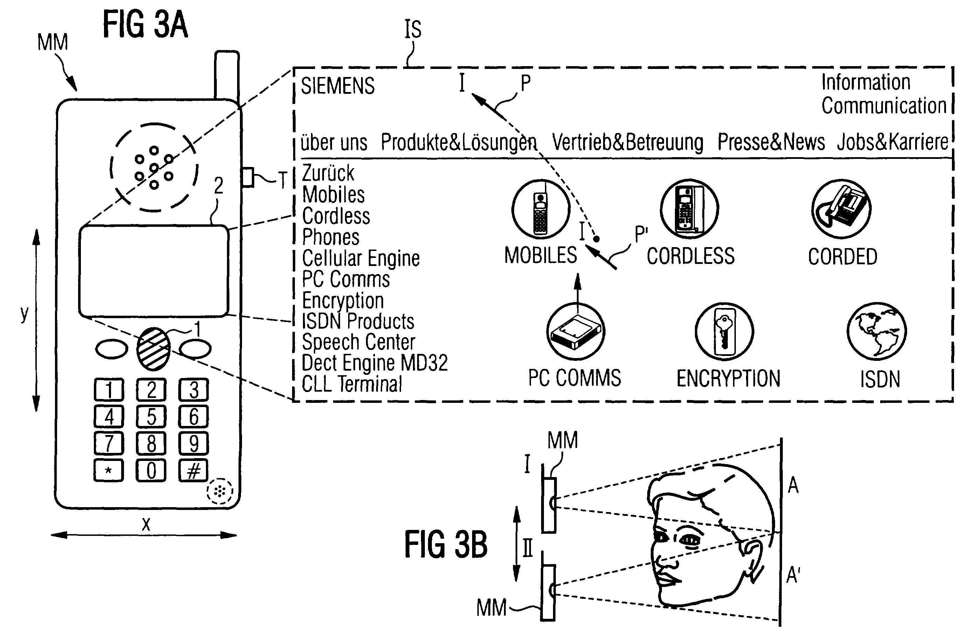

Figuren 3a und 3b zeigen schematische Darstellungen eines mobilen Multimedia-Kommunikationsendgeräts mit der erfindungsgemäßen Eingabevorrichtung gemäß einem ersten Ausführungsbeispiel. In Figur 3a bezeichnet MM ein mobiles Multimedia-Kommunikationsendgerät, wie es beispielsweise in Form eines mobilen Bildtelefons mit Internet-Zugang realisiert sein kann. Das mobile Multimedia-Kommunikationsendgerät MM besitzt neben den üblichen Funktionseinheiten im wesentlichen eine Aufnahmeeinheit 1, eine Anzeigeeinheit 2 sowie eine Aktivierungstaste T zum Aktivieren/Deaktivieren der Eingabevorrichtung. Bei einem Internet-Zugriff wird in der Anzeigeeinheit 2 beispielsweise die vergrößert dargestellte Internet-Seite IS (web-page) dargestellt, wobei ein Zeigersymbol P an der Position I als Auswahlinformation dargestellt wird. Zum Bewegen des Zeigersymbols P von der Position I zur Position II kann gemäß Figur 3b ein Benutzer beispielsweise das mobile Multimedia-Kommunikationsendgerät MM vor seinem Gesicht nach unten bewegen, wodurch anstelle der Bildinformationen A in der Position I nunmehr die Bildinformationen A' in der Position II an der Aufnahmeeinheit 1 aufgenommen werden. Die dadurch entstehenden Makro-Verschiebungen werden, wie vorstehend beschrieben wurde, von der Auswerteeinheit 3 erfaßt und von der Datenverarbeitungseinheit 4 derart verarbeitet, daß die Anzeigeeinheit 2 den Zeiger P' nunmehr an der Position II der dargestellten Internet-Seite IS darstellt. Auf diese Weise erhält man durch eine Verschiebung der Aufnahmeeinheit 1 relativ zum aufgenommenen Hintergrund eine Verschiebung des die Auswahlinformation darstellenden Zeigersymbols P nach P'.

Wie bereits vorstehend beschrieben wurde, kann anstelle der vertikalen Verschiebung des mobilen Multimedia-Kommunikationsendgeräts von einer Position I zu einer Position II auch eine Verschwenkung durchgeführt werden, wodurch sich das Zeigersymbol P in gleicher Weise zur Position II für das Zeigersymbol P' verschieben läßt.

Mobile Multimedia-Kommunikationsendgeräte, wie sie beispielsweise in Figuren 3a und 3b dargestellt sind, besitzen insbesondere dann einen Vorteil, wenn sie als mobile Bildtelefone ausgestattet sind. Mobile Bildtelefone besitzen ohnehin eine großflächige Anzeigeeinheit 2 sowie eine Aufnahmeeinheit 1 zum Aufnehmen von Bildinformationen. Ferner besitzen derartige mobile Bildtelefone bereits als Bildauswerteeinheit 3 eine Bildkompressionseinrichtung zum Komprimieren der aufgenommenen Bildinformationen. Die bei der Bildkompression verwendeten Algorithmen erkennen hierbei eine Bewegung in den Bildinformationen A und A', wobei die Bewegung der Gesamt-Bildinformation derart berechnet wird, daß sich ein Gesamt-bzw. Haupt-Bewegungsvektor ergibt, der gleichbedeutend mit der Bewegung bzw. Verschiebung des mobilen Multimedia-Kommunikationsendgeräts MM bzw. der dazugehörigen Bildinformationen A und A' ist. Dieser bei der Bildkompression leicht zu ermittelnde Gesamt-bzw. Haupt-Bewegungsvektor kann nunmehr als Steuerinformation mit entsprechender x-, y- und z-Komponente verarbeitet werden und die Auswahlinformation, d. h. die Zeigersymbole P bzw. P' entsprechend verschieben. Da die verwendeten Kompressions-Algorithmen im wesentlichen in einem mobilen Bildtelefon bereits vorhanden sind, entstehen somit keine Mehrkosten. Zum Umschalten bzw. Aktivieren/Deaktivieren der Eingabevorrichtung benötigt das mobile Bildtelefon bzw. mobile Multimedia-Kommunikationsendgerät MM lediglich eine Aktivierungstaste T.

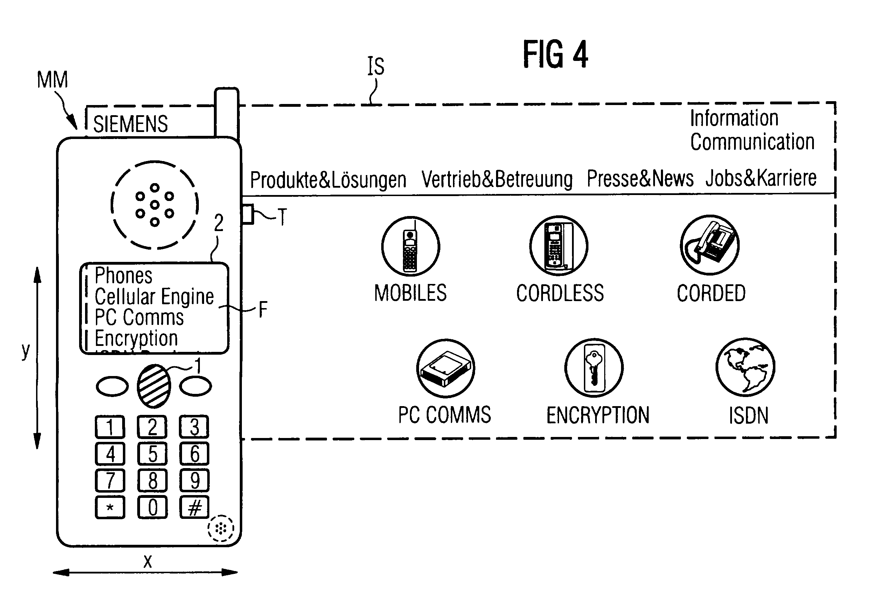

Figur 4 zeigt eine schematische Darstellung eines mobilen Multimedia-Kommunikationsendgeräts mit einer Eingabevorrichtung gemäß einem zweiten Ausführungsbeispiel. Gleiche Bezugszeichen bezeichnen in Figur 4 gleiche oder entsprechende Komponenten wie in Figuren 3a und 3b, weshalb auf eine detailierte Beschreibung nachfolgend verzichtet wird.

Beim mobilen Multimedia-Kommunikationsendgerät MM mit einer Eingabevorrichtung gemäß dem zweiten Ausführungsbeispiel stellt die Anzeigeeinheit 2 nicht die vollständige Internet-Seite IS dar, sondern lediglich einen selektiven Ausschnitt F. Diese Art der Darstellung von Informationen beispielsweise aus dem Internet oder einer sonstigen Anwendung besitzt den Vorteil, daß die Informationen der dargestellten Seite IS für den Benutzer eine verbesserte Lesbarkeit aufweisen.

Gemäß der vorliegenden Erfindung besitzt die Eingabevorrichtung nunmehr eine intuitive Steuerung der darzustellenden Informationsseite IS. Genauer gesagt muß ein Benutzer das mobile Multimedia-Kommunikationsendgerät mit der Aufnahmeeinheit 1 lediglich in x- und y-Richtung verschieben, um zu den jeweiligen Bereichen der Informationsseite IS zu gelangen, wodurch ohne weitere Verwendung von Tasten oder Eingabemedien die Informationsseite IS intuitiv (d.h. Verschieben eines Sichtfensters) ausgelesen werden kann.

Darüberhinaus kann eine Verschiebung in z-Richtung, d.h. eine Vorwärts-/Rückwärtsbewegung des mobilen Multimedia-Kommunikationsendgeräts MM, eine Vergrößerung/Verkleinerung des selektive Ausschnitts F bewirken, die eine intuitive Benutzung vergleichbar mit einer Lupe ermöglicht.

Gemäß Figuren 3 und 4 befindet sich die Aufnahmeeinheit 1 an der Vorderseite des mobilen Multimedia-Kommunikationsendgeräts MM. Es kann sich jedoch auch an der Rückseite des Geräts befinden bzw. eine zweite Aufnahmeeinheit an der Rückseite des mobilen Multimedia-Kommunikationsendgeräts MM angeordnet sein. Bei geeigneter Ausführung der Optik, d. h. ein Scharfstellen der Aufnahmeeinheit 1 ist auch auf sehr kurze Entfernung möglich, kann das mobile Multimedia-Kommunikationsendgerät MM mit der Rückseite auf eine geeignete strukturierte Unterlage gelegt werden und als Ganzes wie eine Maus verschoben werden. Die an der Rückseite befindliche Aufnahmeeinheit erkennt hierbei, wie vorstehend beschrieben wurde, die relative Bewegung bzw. relative Verschiebung der aufgenommenen Bildinformationen (strukturierte Unterlage) und ermittelt daraus die entsprechenden Steuerinformationen zum Ansteuern der Auswahlinformationen, d. h. einem Zeigersymbol P oder einem Anzeigebereich F der Informationsseite IS. Auf diese Weise ergibt sich eine besonders einfache Bedienbarkeit für die Eingabevorrichtung, da sie im wesentlichen mit einer herkömmlichen Maus-Eingabevorrichtung übereinstimmt. Vorzugsweise besitzt in diesem Fall das mobile Multimedia-Kommunikationsendgerät die von herkömmlichen Maus-Eingabevorrichtungen bekannten (nicht dargestellten) Auswahltasten.

Figuren 5a bis 5c zeigen vergrößerte Teilansichten eines mobilen Multimedia-Kommunikationsendgeräts MM mit einer Eingabevorrichtung gemäß einem dritten Ausführungsbeispiel. In den Figuren 5a bis 5c bezeichnen gleiche Bezugszeichen gleiche Komponenten wie in den Figuren 1 bis 4, weshalb auf eine detaillierte Beschreibung nachfolgend verzichtet wird.

Gemäß Figuren 5a bis 5c kann die Eingabevorrichtung gemäß dem dritten Ausführungsbeispiel in gleicher Weise wie eine sogenannte herkömmliche "touch-pad"-Eingabevorrichtung verwendet werden. In Figur 5a bezeichnet das Bezugszeichen 1 wiederum eine Aufnahmeeinheit 1, die jedoch ein spezielles Makro-Kamerasystem darstellt. Genauer gesagt besitzt die Aufnahmeeinheit 1 gemäß Figuren 5a bis 5c die Möglichkeit, sehr feine Strukturen in unmittelbarer Nähe der Kamera aufzunehmen, wodurch beispielsweise die Fingerlinien eines auf die Aufnahmeeinheit unmittelbar aufgelegten Fingers scharf aufgenommen werden.

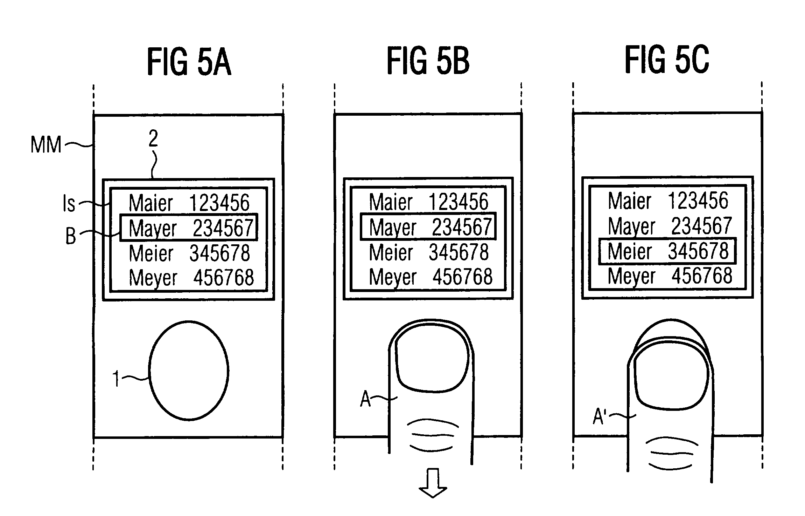

Die Anzeigeeinheit 2 zeigt gemäß Figuren 5a bis 5c eine Telefonbuchliste mit einer Vielzahl von Namen und dazugehörigen Telefonnummern. Die in der Anzeigeeinheit 2 dargestellte Telefonbuchliste entspricht somit einer Informationsseite IS, wobei die Auswahlinformation weder einen Zeigersymbol P zum Angeben einer Auswahlposition noch eine Anzeigefläche F, sondern ein vorbestimmtes Auswahlfeld B in Form eines beispielsweise farblich markierten Balkens darstellt. Zur Steuerung der Eingabe bzw. zur Auswahl des Namens Meier mit der Telefonnummer 345678 legt nunmehr ein Benutzer seinen Finger auf die Aufnahmeeinheit 1, wobei die Eingabevorrichtung über die nicht dargestellte Aktivierungstaste T aktiviert ist. Gemäß Figur 5b werden nunmehr die Fingerlinien als Bildinformation A aufgenommen, wobei der Benutzer zur Verschiebung des Balkens B seinen Finger nach unten bewegt. Die Figur 5c zeigt hierbei eine Teilansicht des mobilen Multimedia-Kommunikationsendgeräts MM, wobei der Finger in einer unteren Position dargestellt ist. Die Aufnahmeeinheit 1 hat demzufolge eine Verschiebung der aufgenommenen Bildinformationen A → A' auf der Grundlage der Fingerlinien erkannt und als vertikale Verschiebung nach unten ausgewertet. Demzufolge wird eine entsprechende Steuerinformation von der Auswerteeinheit 3 an die Datenverarbeitungseinheit 4 ausgegeben, wodurch der Balken B in der Anzeigeeinheit 2 nach unten verschoben wird und nunmehr den gewünschten Namen Meier mit der Telefonnummer 345678 unterlegt.

Zum Auswählen des gewünschten Namens kann die Eingabevorrichtung gemäß dem dritten Ausführungsbeispiel ferner einen Drucksensor zum Bestätigen der angezeigten Auswahlinformation, d.h. des durch den Balken B unterlegten Namens aufweisen, wodurch weitere Festtasten oder sogenannte menügesteuerte "soft keys" eingespart werden.

Bei entsprechender Dimensionierung der Aufnahmeeinheit 1 und der Auswerteeinheit 3 kann auf diese Weise auch eine Eingabe erfolgen, wie sie beispielsweise von herkömmlichen "touch-pads" und/oder "touch-screens" bekannt ist. Durch die Integration eines Druck-Sensors in die Aufnahmeeinheit 1 wird der Platzbedarf für die Eingabevorrichtung weiter verringert und der Bedienkomfort verbessert. Insbesondere gegenüber den herkömmlichen "touch-pads" wird bei der Eingabevorrichtung gemäß dem dritten Ausführungsbeispiel nicht ein Schwerpunkt einer Auflagefläche ermittelt, sondern die genaue Position bzw. Bewegung des Fingers anhand seiner Linienzeichnung verfolgt. Daher ist die Genauigkeit dieser Eingabevorrichtung wesentlich größer als bei den herkömmlichen Eingabevorrichtungen. Im wesentlichen wird somit auch bei der Eingabevorrichtung gemäß dem dritten Ausführungsbeispiel eine relative MakroVerschiebung der aufgenommenen Bildinformationen zur Steuerung von Auswahlinformationen verwendet.

Vorzugsweise wird als Aufnahmeeinheit 1 eine CCD- oder CMOS-Sensorkamera verwendet. Die Aufnahmeeinheit 1 befindet sich hierbei entweder an der Vorderseite oder an der Rückseite eines jeweiligen Eingabe- bzw. Computersystems, sie ist jedoch nicht darauf beschränkt und kann ebenso an einer anderen Position angeordnet sein und beispielsweise über Spiegel in eine der Anzeigerichtung der Anzeigeeinheit 2 gleiche oder entgegengesetzte Richtung umgelenkt werden.

Die Erfindung wurde vorstehend anhand eines mobilen Multimedia-Kommunikationsendgeräts beschrieben. Sie ist jedoch nicht darauf beschränkt und umfaßt in gleicher Weise Kleinst-Computersysteme ohne Kommunikationsanbindung, wie z. B. sogenannte Palm-Geräte. In gleicher Weise kann die vorliegende Erfindung auch auf schnurgebundene Telekommunikations-Endgeräte und sonstige Computersysteme angewendet werden.

## Patentansprüche

1. Eingabevorrichtung für Computersysteme mit
einer Aufnahmeeinheit (1) zum seriellen Aufnehmen von Bildinformationen (A, A');
einer Bildauswerteeinheit (3) zum Auswerten der aufgenommenen Bildinformationen (A, A') und Ermitteln von Steuerinformationen (x, y, z);
einer Datenverarbeitungseinheit (4) zum Verarbeiten der Steuerinformationen (x, y, z) in Auswahlinformationen(P; B; F); und
einer Anzeigeeinheit (2) zum Anzeigen der Auswahlinformationen (P; B; F)
**dadurch gekennzeichnet**, daß die Bildauswerteeinheit (3) die Steuerinformationen (x, y, z) aus einer relativen Verschiebung der seriell aufgenommenen Bildinformationen (A, A') ermittelt.

2. Eingabevorrichtung nach Patentanspruch 1,
**dadurch gekennzeichnet**, daß die Bildauswerteeinheit (3) eine Bildkompressionseinrichtung zum Erzeugen von Bewegungsvektoren aufweist, wobei die Steuerinformationen einen Haupt-Bewegungsvektor (x, y, z) der seriell aufgenommenen Bildinformationen (A, A') darstellen.

3. Eingabevorrichtung nach Patentanspruch 1 oder 2,
**dadurch gekennzeichnet**, daß die Auswahlinformation in einem angezeigten Bild (IS) eine Auswahlposition (P), ein Auswahlfeld (B) und/oder eine gesamte Anzeigefläche (F) der Anzeigeeinheit (2) darstellt.

4. Eingabevorrichtung nach einem der Patentansprüche 1 bis 3, **dadurch gekennzeichnet**, daß die Steuerinformationen eine x-Komponente aufweisen, wobei die Bildauswerteeinheit (3) im wesentlichen eine parallele relative Verschiebung der Bildinformationen (A, A') in x-Richtung berücksichtigt.

5. Eingabevorrichtung nach einem der Patentansprüche 1 bis 4, **dadurch gekennzeichnet**, daß die Steuerinformationen eine y-Komponente aufweisen, wobei die Bildauswerteeinheit (3) im wesentlichen eine parallele relative Verschiebung der Bildinformationen (A, A') in y-Richtung berücksichtigt.

6. Eingabevorrichtung nach einem der Patentansprüche 1 bis 5, **dadurch gekennzeichnet**, daß die Steuerinformationen eine z-Komponente aufweisen, wobei die Bildauswerteeinheit (3) im wesentlichen eine konzentrische relative Verschiebung der Bildinformationen (A, A') in x- und y-Richtung berücksichtigt.

7. Eingabevorrichtung nach Patentanspruch 6, **dadurch gekennzeichnet**, daß die Aufnahmeeinheit (1) eine Verschiebevorrichtung zum Erzeugen der parallelen und/oder konzentrischen relativen Verschiebung aufweist.

8. Eingabevorrichtung nach Patentanspruch 6 oder 7, **dadurch gekennzeichnet**, daß die Anzeigeeinheit (2) die Auswahlinformation (F) in Abhängigkeit von der z-Komponente der Steuerinformation vergrößert oder verkleinert.

9. Eingabevorrichtung nach einem der Patentansprüche 1 bis 8, **dadurch gekennzeichnet**, daß das Computersystem ein mobiles Multimedia-Kommunikationsendgerät (MM) darstellt.

10. Eingabevorrichtung nach Patentanspruch 9,
**dadurch gekennzeichnet**, daß die Aufnahmeeinheit (1) in Anzeigerichtung der Anzeigeeinheit (2) aufnimmt.

11. Eingabevorrichtung nach einem der Patentansprüche 9 oder 10, **dadurch gekennzeichnet**, daß die Aufnahmeeinheit (1) entgegen der Anzeigerichtung der Anzeigeeinheit (2) aufnimmt.

12. Eingabevorrichtung nach Patentanspruch 9 oder 10, **gekennzeichnet durch** zumindest eine weitere Aufnahmeeinheit, die entgegen der Anzeigerichtung der Anzeigeeinheit (2) aufnimmt.

13. Eingabevorrichtung nach einem der Patentansprüche 1 bis 12, **dadurch gekennzeichnet**, daß die Aufnahmeeinheit eine CCD- oder CMOS-Sensorkamera aufweist.

14. Eingabevorrichtung nach einem der Patentansprüche 1 bis 13, **gekennzeichnet durch** zumindest eine Aktivierungsvorrichtung (T) zum Aktivieren/Deaktivieren der Eingabevorrichtung.

15. Eingabevorrichtung nach einem der Patentansprüche 1 bis 14, **dadurch gekennzeichnet**, daß die Aufnahmeeinheit (1) ein Makro-Kamerasystem darstellt, mit dem die Bildinformationen (A, A') aus sehr kurzer Entfernung scharf aufgenommen werden.

16. Eingabevorrichtung nach einem der Patentansprüche 1 bis 15, **dadurch gekennzeichnet**, daß die Aufnahmeeinheit (1) einen Drucksensor zum Bestätigen der angezeigten Auswahlinformation (P, B, F) aufweist.

17. Eingabevorrichtung nach einem der Patentansprüche 1 bis 16, **dadurch gekennzeichnet**, daß das Computersystem ein mobiles Bildtelefon darstellt.

18. Verfahren zur Eingabe von Steuerinformationen in ein Computersystem bestehend aus den Schritten:
a) Aufnehmen von ersten Bildinformationen (A);
b) Aufnehmen von zweiten Bildinformationen (A');
c) Ermitteln einer relativen Verschiebung zwischen den ersten und zweiten Bildinformationen; und
d) Erzeugen der Steuerinformationen (x, y, z) auf der Grundlage der ermittelten relativen Verschiebung.

19. Verfahren nach Patentanspruch 18,
**dadurch gekennzeichnet**, daß das Ermitteln in Schritt c) ein Ermitteln von Bewegungsvektoren mittels eines Bild-Kompressionsverfahrens darstellt.

20. Verfahren nach Patentanspruch 19,
**dadurch gekennzeichnet**, daß das Erzeugen gemäß Schritt d) ein Erzeugen von Steuerinformationen (x, y, z) auf der Grundlage eines Haupt-Bewegungsvektors darstellt.
